(19) Europäisches Patentamt
European Patent Office
Office européen des brevets

(11) **EP 1 473 708 B1**

(12) **EUROPEAN PATENT SPECIFICATION**

(45) Date of publication and mention
of the grant of the patent:
**17.10.2007 Bulletin 2007/42**

(51) Int Cl.:
*G10L 15/18* *(2006.01)*  *G10L 15/08* *(2006.01)*
*G10L 15/00* *(2006.01)*

(21) Application number: **03008875.1**

(22) Date of filing: **29.04.2003**

(54) **Method for recognizing speech**

Verfahren zur Spracherkennung

Méthode pour la reconnaissance de la parole

(84) Designated Contracting States:
**DE FR GB**

(43) Date of publication of application:
**03.11.2004 Bulletin 2004/45**

(73) Proprietor: **Sony Deutschland GmbH**
**10785 Berlin (DE)**

(72) Inventors:
• **Goronzy, Silke,**
c/o Stuttgart Technology Center
70327 Stuttgart (DE)
• **Kemp, Thomas,**
c/o Stuttgart Technology Center
70327 Stuttgart (DE)

(74) Representative: **Müller - Hoffmann & Partner**
**Patentanwälte,**
**Innere Wiener Strasse 17**
**81667 München (DE)**

(56) References cited:
**WO-A-02/45076**

• **MINGKUAN LIU ET AL: "Mandarin accent adaptation based on context-independent/ context-depe ndent pronunciation modeling" INTERNATIONAL CONFERENCE ON ACOUSTICS, SPEECH AND SIGNAL PROCESSING 2000, PROCEEDINGS OF ICASSP-2000, vol. 2, 5 June 2000 (2000-06-05), pages 1025-1028, XP010504900**
• **SCHRAMM H ET AL: "Efficient integration of multiple pronunciations in a large vocabulary decoder" INTERNATIONAL CONFERENCE ON ACOUSTICS, SPEECH AND SIGNAL PROCESSING 2000, PROCEEDINGS OF ICASSP-2000, vol. 3, 5 June 2000 (2000-06-05), pages 1659-1662, XP010507675**
• **BROUSSEAU J ET AL: "DIALECT-DEPENDENT SPEECH RECOGNIZERS FOR CANADIAN AND EUROPEAN FRENCH" PROCEEDINGS OF THE INTERNATIONAL CONFERENCE ON SPOKEN LANGUAGE PROCESSING (ICSLP). BANFF, OCT. 12 - 16, 1992, EDMONTON, UNIVERSITY OF ALBERTA, CA, vol. 2, 12 October 1992 (1992-10-12), pages 1003-1006, XP000871622**

**Description**

The invention relates to a method for recognizing speech.

Speech recognition systems are generally trained on large speech databases. These speech databases generally cover the typical pronunciation forms of the people that later use the system. A speech recognition system e.g. may be trained with a speech database covering a certain dialect or accent, like e.g. with speech data of people with a Bavarian accent (accent typical for Southern German). Thus, the recognition rate for users of the speech recognition system speaking with the Bavarian accent will be high. However, if a user with a different accent, e.g. from the North of Germany uses the system, the recognition rate will be low.

The same situation occurs, if a non-native speaker uses a speech recognition system that is only trained on speech data of native speakers. For a non-native speaker the recognition rate will be low. Such a situation occurs frequently if the system is e.g. a public information system used by tourists from time to time.

Typically, in prior art speech recognition systems, if the system is used by non-natives considerably often, special models for the typical mispronunciations of foreigners will be introduced. However, these additional special models increase the complexity of the system and the confusability of the vocabulary, so that for the average native speaker the performance drops. On the other hand, of course, the performance for non-native speakers will improve.

The "correct" model for the situation described above would be a superposition of two statistical models, one for the native speakers, and one for non-native speakers. This, however, is frequently not achievable because for the less frequent modes (the non-native speakers), not sufficient data is available to estimate their models robustly.

Prior art document "Mandarin accent adaptation based on context-independent/context-dependent pronunciation modeling" (International Conference on Acoustics, Speech and Signal Processing, Proceedings of ICASSP-2000. June 5, 2000, Vol. 2, pages 1025-1028) relates to a method for accent adaptation based on context-independent/context-dependent pronunciation modeling. It is mentioned to use a pronunciation modeling technology in order to get a context-independent and a context-dependent accent specific syllable confusion matrix according to acoustic recognition results. It is also mentioned to use an accent-specific syllable pronunciation variation dictionary which has been constructed from the determined confusion matrix.

It is an object of the invention to provide a method for recognizing speech, which improves the recognition rate.

To achieve this objective, the invention provides a method according to claim 1. In addition, the invention provides a computer program product according to claim 6 and a computer readable storage medium according to claim 7. Further features and preferred embodiments are respectively defined in respective subclaims and/or in the following description.

A method for recognizing speech according to the invention comprises the steps of

- receiving a speech input of a user,
- determining a set of ordered hypotheses for said received speech input, wherein said set of ordered hypotheses contains tag information for each of said ordered hypotheses, which is descriptive for at least one type or variation of pronunciation.
- using a tag language model operating on said tag information only.
- re-ordering said set of hypotheses using said tag language model, and
- outputting a set of re-ordered hypotheses and choosing the best hypothesis.

Preferably, said tag information is generated using a primary language model, which contains tags for at least some of its entries, in particular words, which tags are chosen to be descriptive for at least one type or variation of pronunciation of the respective entry or word.

Alternatively, in an other embodiment, said tag information (TI) is generated using a dictionary, which contains tags for at least some of its entries, in particular words, which tags are chosen to be descriptive for at least one type or variation of pronunciation of the respective entry or word. The dictionary is preferably a modified pronunciation dictionary. Using this embodiment, it is particularly easy to integrate the inventive method into existing systems, because one only needs to modify the dictionary to include tags and apply the tag language model after the usual way of applying a standard language model.

Also it is possible, that said tag information (TI) is generated using a word-tag database, which contains tags for at least some of its word entries, which tags are chosen to be descriptive for at least one type or variation of pronunciation of the respective entry or word.

Advantageously, said tag language model operates on words in addition to said tag information.

Further, said tag language model is advantageously chosen to depend on all of said tag information of each given hypothesis of said received speech input, i.e. said tag language model is chosen not to be causal.

Also advantageously, the order ($n$) of the $n$-gram of said tag language model is higher than the order of a standard language model, in particular of a trigram.

A computer program product according to the invention, comprises computer program means adapted to perform and/or to realize the inventive method of recognizing speech and/or the steps thereof, when it is executed on a computer, a digital signal processing means, and/or the like.

A computer readable storage medium according to the invention comprises the inventive computer program product.

The invention and advantageous details thereof will be explained by way of an exemplary embodiment thereof in the following with reference to the accompanying drawings, in which

**Fig. 1**   is a first flowchart showing the steps according to the invention; and

**Fig. 2**   is a second flowchart showing the steps according to the invention wherein the re-ordering of hypotheses is illustrated in detail.

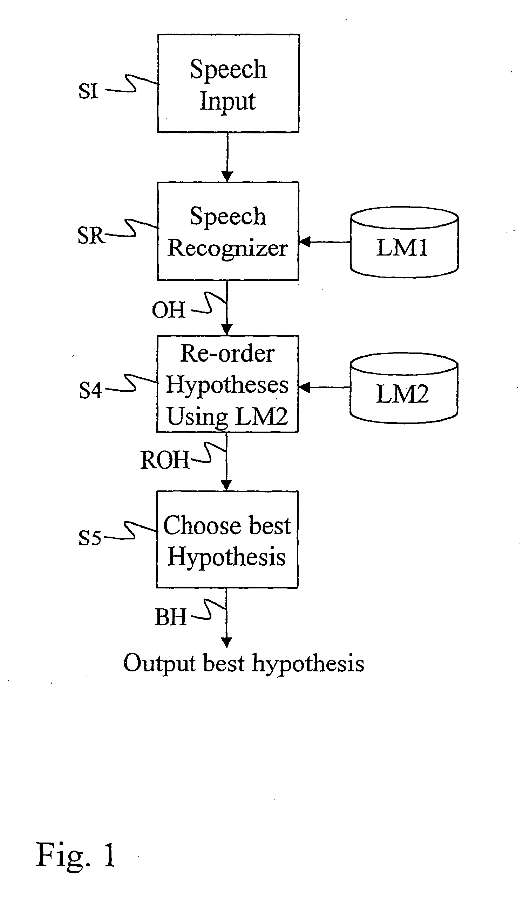

In Fig. 1 the speech input SI of a user (in the following also referred to as speaker) of the speech recognition system is processed by a speech recognizer SR using a first language model LM1.

In a first embodiment of the invention, this first language model LM1 is a tagged trigram language model, which contains tags for some or all of its entries, which are in particular words. The tags describe a type or variation of pronunciation for the respective entry or word. If the system is mainly used by people speaking without a certain dialect or accent, then it is also possible that not all words receive a tag, but only the words, for which a different pronunciation that shall be modeled in order to improve the recognition rate as explained below.

In a second embodiment, the first language model LM1 is a standard trigram language model. Further, in this embodiment, a word-tag database with tagged words exists. Again, the tags describe a type or variation of pronunciation for the respective entry or word, that shall be considered to improve the recognition rate as explained below.

No matter which of the above-mentioned embodiments is chosen, the output of the speech recognizer is a set of ordered hypotheses (OH). Within each hypothesis there can exist tag information, which is either generated using the tagged trigram language model, i.e. the first embodiment is chosen, or using the standard trigram language model in combination with the word-tag database, i.e. the second embodiment is chosen. The tag information describes the different possible pronunciations for each word, i.e. a word may have several possible pronunciations and therefore there can exist several different hypotheses each one with a different tag for the respective word.

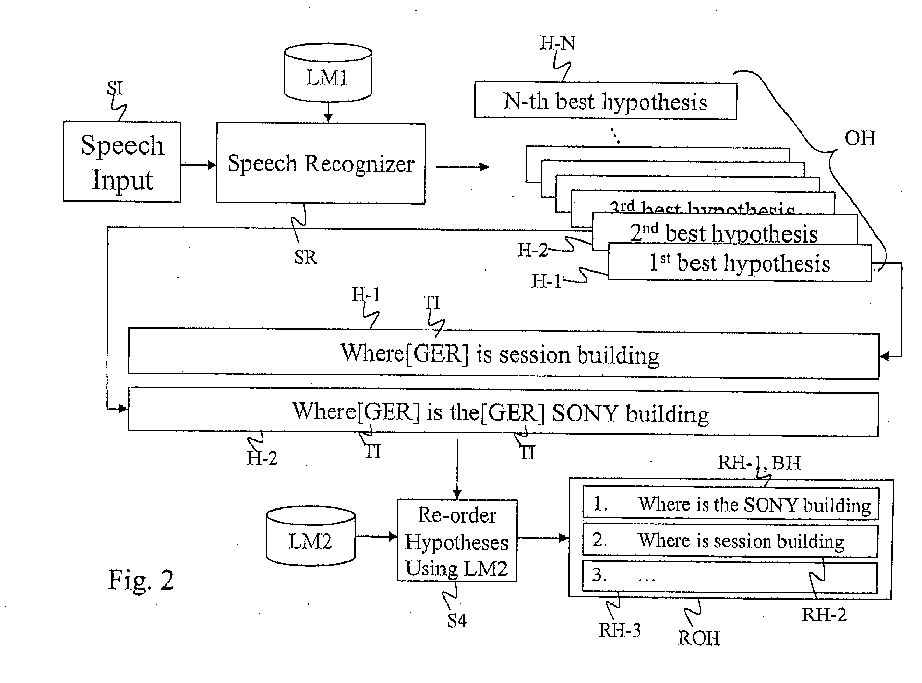

The set of ordered hypotheses (OH) consists of a first best hypothesis H-1, a second best hypothesis H-2, and so on up to an N-th best hypothesis H-N. The first best hypothesis H-1 is the most likely recognition result of the recognized speech input SI without taking into account the tags, i.e. without taking into account different pronunciation forms (see Fig. 2 below). The second best hypothesis H-2 is the second most likely recognition result and so on.

The ordered hypotheses OH are then, in a re-ordering step S4, re-ordered using a tag language model LM2 that operates on the above-mentioned tags. The re-ordering will be explained below. The output of the re-ordering step S4 is a set of re-ordered hypothesis ROH. In a subsequent choosing step S5, a best hypothesis BH of the re-ordered hypotheses ROH is chosen to be the output, i.e. the recognition result of the speech input SI. The best hypothesis BH is the best recognition result taking into account the different pronunciation forms of the different words.

In the following the use of the tag language model LM2, also referred to as second language model, to model the different pronunciation forms of certain words will be explained at hand of an example.

The speech recognizer may have output the following first best hypothesis H-1, second best hypothesis H-2, and third best hypothesis H-3:

    H-1: "Der[GER] Hund[GER] bellt[GER]"
    H-2: "Der[GER] und[GER] bellt[GER]"
    H-3: "Der[FRA] Hund[FRA] bellt[FRA]"

These hypotheses are generated using the classical trigram language modeling technique, i.e. the first language model LM1, whereby the following probabilities have been calculated to get the three hypothesis H-1, H-2, and H-3:

    P(Der | und bellt) and
    P(Der | Hund bellt).

This means, the tags are not considered using the first language model LM1. In the example there exist different tags for German pronunciation (tag [GER]) and for French pronunciation (tag [FRA]). In the example, for the word "Hund" there exist two pronunciations for "Hund" and therefore two hypotheses that model these two different pronunciations. One represents the German pronunciation

Hund[GER] = H U N T

and one represents the French pronunciation

Hund[FRA] = U N T .

The tag language model LM2 is now used to estimate the following tag probability $P_{w/tags}$, which takes into account the different pronunciations:

$$P_{w/tags} = P_{LM1} \cdot P_{LM2} \qquad\qquad (1)$$

Hereby, a first probability $P_{LM1}$ and a second probability $P_{LM2}$ denote the probability given by the first language model LM1 and the tag language model LM2, respectively. Thereby the second probability $P_{LM2}$ models only the context of the previous pronunciations. Note that it is also possible, that the pronunciations of following words are considered, which is e.g. possible if N-best-lists are used. In this case the tag language model LM2 is no longer causal. However, in the example the tag language model LM2 is assumed to be causal. If the tag language model LM2 is causal, then it can also be applied during the actual search, i.e. without operating on N-best-lists, which are the ordered hypotheses OH. In the example, the following probabilities need to be estimated:

P(Der[GER] |Hund[GER] bellt[GER]) = P(Der | Hund bellt) * P(GER | GER GER GER)

P(Der[GER] | und[GER] bellt[GER]) = P(Der | und bellt) * P(GER | GER GER GER)

P(Der[FRA] | Hund[FRA] bellt[FRA]) = P(Der | Hund bellt) * P(FRA | FRA FRA FRA)

In the example, the tag language model LM2 may use a context of three preceding tags. Note that this is only an example and in reality much longer contexts can be used. The use of longer contexts is possible, since the second language model LM2 has a very limited vocabulary; in the example it consists only of two "words", which are the tags [GER] and [FRA]. Therefore, a training with longer contexts is no problem. The second probability $P_{LM2}$ in this case may be given as follows for the case, that a word is spoken with a German pronunciation:

P(GER | GER GER GER) = 0.98
P(GER | GER GER FRA) = 0.90
P(GER | GER FRA GER) = 0.90
P(GER | FRA GER GER) = 0.90
P(GER | FRA GER FRA) = 0.50
P(GER | GER FRA FRA) = 0.50
P(GER | FRA FRA GER) = 0.50
P(GER | FRA FRA FRA) = 0.30

Similar probabilities of course exist for the case of a French pronunciation, given a certain tag context, i. e. probabilities P(FRA | ...).
This simple example expresses that generally the German pronunciation is strongly favored: If all three preceding words have been spoken with a German pronunciation, then the probability that the following word will be spoken with a German pronunciation is 98 %. However, if one word within the three preceding words has been spoken with a French pronunciation, then the probability for a German pronunciation is reduced to 90 %, with two words spoken with a French pronunciation to 50 %, and with three words spoken with a French pronunciation to 30 %. Of course, the probability to obtain a French pronunciation is always 100 % minus the probability to obtain a German one.
In eq. (1) the mathematical identity is only given, if the first probability $P_{LM1}$ depends on "FRA" in the third case above (P(Der[FRA] | Hund[FRA] bellt[FRA])), or if the second probability $P_{LM2}$ depends on "Der". In the following equation "context" stands for the above context, which is "Hund bellt".

P(Der, FRA | context)

= P(Der | context, FRA) * P(FRA | FRA FRA FRA)

$$= P(\text{Der} \mid \text{context}) * P(\text{FRA} \mid \text{FRA FRA FRA}, \text{Der})$$

However, in an approximation the tag probability $P_{w/tags}$ can be calculated as stated above. Note, that in the example "context = Hund bellt", i.e. the context is rather short and only contains two words as is the case using standard language models. The tag-context however contains three tags. As mentioned, for the tag language model longer contexts can be used, because it is possible to train them since they contain only few tags.

After applying the second language model LM2, the above probabilities may result in:

$$P(\text{Der[GER]} \mid \text{Hund[GER] bellt[GER]}) = 0.2$$
$$P(\text{Der[GER]} \mid \text{und[GER] bellt[GER]}) = 0.3$$
$$P(\text{Der[FRA]} \mid \text{Hund[FRA] bellt[FRA]}) = 0.7$$

According to these probabilities, the three hypothesis are re-ordered to give the set of re-ordered hypotheses ROH as follows, i.e. a first re-ordered hypothesis RH-1, a second re-ordered hypothesis RH-2, and a third re-ordered hypothesis RH-3:

RH-1: "Der[FRA] Hund[FRA] bellt[FRA]"
RH-2: "Der[GER] und[GER] bellt[GER]"
RH-3: "Der[GER] Hund[GER] bellt[GER]"

Now, the best re-ordered hypothesis BH is chosen. In the example, this is "Der[FRA] Hund[FRA] bellt[FRA]".

More complex solutions are possible. It is e.g. possible to make the second probability $P_{LM2}$ dependent on words in addition to the tags. An example is:

$$P(\text{GER word3} \mid \text{tag3 tag2 tag1})$$

This term may model the fact, that the probability for a German pronunciation of word3 is different than for other words Wx. An example where this is useful is the English word "this". Some Germans manage well to pronounce the "th" correctly. However, almost no German pronounces the soft "g" at the end of English words, e.g. in "d o g", correctly. Most Germans will speak "d o k". Given these examples,

$$P(\text{GER dog} \mid \text{GER GER GER})$$

will be chosen to be higher than

$$P(\text{GER this} \mid \text{GER GER GER}).$$

One other possibility to use the idea of the invention is to make the tag prediction dependent on the words themselves. An example where this is useful to calculate the probability for a certain tag is:

$$P(\text{GER} \mid \text{Lied das mir spiel})$$

In this example, the fact that most song-titles are English is modeled.

An important fact of the invention is, that the accent or dialect of a speaker does not need to be decided on explicitly. Instead, the hypothesis with the highest Sum-Probability is chosen, whereby the first probability $P_{LM1}$ from a standard tri-gram language model and the second probability $P_{LM2}$ from the tag language model LM2 are used.

The invention gives a particularly easy formulation of the overall language model to calculate $P_{w/tags}$, which can be seen as a superposition model that can be constructed starting with a baseline model (the first language model LM1) of a basic mode. It is a particular advantage of the invention that the overall language model does not need to be a complete model, which can frequently not be estimated anyway, but can focus on some particularly strong deviations of a second mode with respect to a first mode (basic mode). The first mode means that native speakers use the system (the first language model LM1 is used); the second mode means that non-native speakers use it (the overall language model is used, i.e. the combination of the first language model LM1 and the tag language model LM2, cf. above). The baseline model (first language model LM1) can be shown to be a limiting case of the new combined model, i.e. the overall language model.

At hand of Fig. 2 the details regarding the tag language model LM2 and the re-ordering of the set of ordered hypotheses OH will be explained.

According to the invention, the first language model LM1 is e.g. based on a standard statistical trigram model that is modified to include tags, i.e. tag information TI, to some or all of its items (words, entries). For simplicity, no-tag is regarded as a "standard" tag. Suppose, e.g. a speech-operated English public information system is typically used by native American users but also by German tourists. It is well known that Germans are unable to pronounce "th", so there is an additional entry for the word "though" added - a pronunciation 'S OU' in addition to the native "DH OU". Clearly, this interferes with the standard pronunciation of the word "so", and the error rate for Americans will be higher than before. According to the invention, the pronunciation "S OU" receives the tag "GERMAN" in the trigram language model, while the pronunciation "DH OU" would receive no tag (or equivalently the "AMERICAN" tag). This way the mentioned interference as in prior art systems is prevented.

In Fig. 2, first the probabilities for the set of ordered hypotheses OH are computed by the speech recognizer SR in the ordinary way, without taking into account the tags. Afterwards, the tag language model LM2 is used to generated the set of re-ordered hypotheses ROH. As explained above, basically, the history of the tags is evaluated and the probabilities for the alternatives are computed from the tag history. If, e.g. the history of tags contains many words with GERMAN tag, the probability for the GERMAN-tagged alternative in the mini-class "though" will be high, which is modeled by the tag language model LM2. If there is no GERMAN tag observed so far, on the other hand, the probability of the GERMAN-tagged alternative is low. The probability of the GERMAN-tagged alternative inside the mini-class "though" depends thus on the occurrence of previous GERMAN-tagged words in the decoded utterance.

The tag language model LM2 is best used during the re-scoring of N-best lists or word lattices, since the real time constraints are much relaxed, and the complete sentence history is readily available during the re-scoring stage. Additionally, in re-scoring, it can also incorporate knowledge about future words (i.e. words that come after the current word in the utterance) in the probability computation, in the same way as described above. By doing so, the tag language model LM2 is no longer causal but depends on all tags in the utterance that is currently being re-scored.

As mentioned above, the tag language model LM2 can also be conditioned on the word entries themselves, in addition to the tags. If the tag language model is additionally conditioned on the words, there could be trigger phrases that increase the local likelihood for the ENGLISH tag, like e.g. "Spiele das Lied ..." (English translation: "play the song..."), assuming that many song titles are English, as has already been mentioned above.

In the example of Fig. 2, the speech recognizer SR using the first language model LM1 is used to generate the set of ordered hypotheses OH for the speech input SI. In the example, the speech input SI was "Where is the SONY building". However, the speech input SI stems from a German speaker speaking English with a German accent. In the example the first best hypothesis H-1 of the set of ordered hypotheses OH is "Where[GER] is session building" and the second best hypothesis H-2 is "Where[GER] is the[GER] SONY building". In the example, the system assumes, that the standard pronunciation is English, therefore, only [GER]-tags are used to denote a German pronunciation of the respective word.

The tag language model LM2 is now used to re-order the set of ordered hypotheses OH. In the example, in the tag language model LM2, there is a German pronunciation variant for the first word "Where" of the first hypothesis H-1. The word "Where" therefore has the tag information TI "GER". In the second hypothesis H-2, there are two words with tag information TI "GER". These are the words "Where" and "the".

In the re-ordering step S4, the tag information TI, i.e. the "GER"-tags, is used by the tag language model LM2 to re-order the set of ordered hypotheses OH. The output is a set of re-ordered hypotheses ROH. In the example, the first hypothesis H-1 and the second hypothesis H-2 have been exchanged in the re-ordering step S4. Thus, the best hypothesis RH-1, BH is now "Where is the SONY building". This best hypothesis BH is chosen as result of the recognition.

In prior art, the drawback of complex language model schemes is usually that they slow down speech recognition time considerably, since the number of language model scores that are used during a decoder run is very high. According to the invention, however, the cost for a language model lookup is not greatly increased and the method lends itself particularly well to N-best or lattice re-scoring, where language modeling costs are comparably low.

Another important feature of the invention is, that the tag language model LM2 can be a cache-based language model

In the following the invention is summarized:

In many applications of automatic speech recognition, there is the situation that some mode of operation should be used which is not the standard mode (e.g. mode "non-native speaker"). Just adding non-native pronunciations to the dictionary will usually result in a performance drop for native speakers, as the confusability in the dictionary is increased. It is a basic idea of this invention to also modify the language model to condition the occurrence of such a non-standard mode of operation on previous indications that such a mode is currently at hand. This is technically achieved by adding a cache-based tag language model and additionally mode-specific tags e.g. in the primary trigram language model. The tag language model will modify the probabilities of the primary trigram if there exist mode-specific tags.

**Reference Symbols**

| BH | best hypothesis |
| FRA | French tag, denoting the French pronunciation of the respective word |
| GER | German tag, denoting the French pronunciation of the respective word |
| H-1., H-2, ..., H-N | first best hypothesis, second best hypothesis, ..... N-th best hypothesis |
| LM1 | first language model |
| LM2 | tag language model, second language model |
| OH | set of ordered hypotheses |
| RH-1, RH-2, ..., RH-N | first re-ordered hypothesis, second re-ordered hypothesis, ..., N-th re-ordered hypothesis |
| ROH | set of re-ordered hypotheses |
| S4 | re-ordering step |
| S5 | choosing step |
| SI | speech input |
| SR | speech recognizer |
| TI | tag information |
| $P_{w/tags}$ | tag probability |
| $P_{LM1}$ | first probability |
| $P_{LM2}$ | second probability |

**Claims**

1. Method for recognizing speech comprising steps of

    - receiving a speech input (SI) of a user,
    - determining a set of ordered hypotheses (OH) for said received speech input (SI),

    wherein said set of ordered hypotheses (OH) contains tag information (TI) for each of said ordered hypotheses, which is descriptive for at least one type or variation of pronunciation,

    - using a tag language model (LM2) operating on said tag information (TI)only.
    - re-ordering said set of hypotheses using said tag language model (LM2), and
    - outputting a set of re-ordered hypotheses (ROH) and choosing the best hypothesis (BH).

2. Method according to claim 1.

    - wherein said tag information (TI) is generated using a primary language model (LM 1),
    - wherein said primary language model (LM1) contains tags for at least some of its entries or words, and
    - wherein said tags are chosen to be descriptive for at least one type or variation of pronunciation of a respective entry or word.

3. Method according to any one of the preceding claims,

    - wherein said tag information (TI) is generated using a dictionary,
    - wherein said dictionary contains tags for at least some of its entries or words, and
    - wherein said tags are chosen to be descriptive for at least one type or variation of pronunciation of the respective entry or word.

4. Method according to any one of the preceding claims,

    - wherein said tag information (TI) is generated using a word-tag database,
    - wherein said word-tag database contains tags for at least some of its word entries , and
    - wherein said tags are chosen to be descriptive for at least one type or variation of pronunciation of the respective word entry.

**5.** Method according to any one of the preceding claims,
wherein said tag language model (LM2) is chosen to depend on all of said tag information (TI) of each given hypothesis (H-1, H-2, ..., H-N) of said received speech input (SI), such that said tag language model (LM2) is chosen not to be causal.

**6.** Computer program product,
comprising computer program means adapted to perform and to realize the method of recognizing speech according to any one of the claims 1 to 5 by performing all the steps thereof, when it is executed on a computer or a digital signal processing means.

**7.** Computer readable storage medium,
comprising a computer program product according to claim 6.


**Patentansprüche**

**1.** Verfahren zur Spracherkennung umfassend die Schritte:

- Empfangen einer Spracheingabe (SI) eines Benutzer,
- Bestimmen eines Satzes geordneter Hypothesen (OH) für die empfangene Spracheingabe (SI), wobei der Satz der geordneten Hypothesen (OH) eine Kennungsinformation (TI) für jede der geordneten Hypothesen enthält, die für wenigstens einen Typ oder eine Variation der Aussprache beschreibend ist,
- Verwenden eines Kennungs-Sprachmodells (LM2), das allein aufgrund der Kennungsinformation (TI) betrieben wird,
- Neuordnung des Satzes der Hypothesen unter Verwendung des Kennungs-Sprachmodells (LM2), und
- Ausgeben eines Satzes von neu geordneten Hypothesen (ROH) und Auswählen der besten Hypothese (BH).

**2.** Verfahren nach Anspruch 1,

- wobei die Kennungsinformation (TI) unter Verwendung eines primären Sprachmodells (LM1) erzeugt wird,
- wobei das primäre Sprachmodell (LM1) Kennungen für wenigstens einige ihrer Eingaben oder Worte enthält, und
- wobei die Kennungen so ausgewählt werden, dass sie wenigstens für einen Typ oder eine Variation der Aussprache einer jeweiligen Eingabe oder eines Wortes beschreibend sind.

**3.** Verfahren nach einem der vorhergehenden Ansprüche,

- wobei die Kennungsinformation (TI) unter Verwendung eines Diktionärs erzeugt wird,
- wobei der Diktionär Kennungen für wenigstens einige seiner Eingaben oder Worte enthält, und
- wobei die Kennungen so ausgewählt werden, dass sie für einen Typ oder Variationen der Aussprache des entsprechenden Eintrags oder Wortes beschreibend sind.

**4.** Verfahren nach einem der vorhergehenden Ansprüche,

- wobei die Kennungsinformation (TI) unter Verwendung einer Wortkennungs-Datenbank erzeugt wird,
- wobei die Wortkennungs-Datenbank Kennungen für wenigstens einige ihrer Einträge oder Worte enthält, und
- wobei die Kennungen so ausgewählt werden, dass sie für wenigstens einen Typ oder eine Variation der Aussprache des entsprechenden Worteintrages beschreibend sind.

**5.** Verfahren nach einem der vorhergehenden Ansprüche,

worin das Kennungssprachmodell (LM2) so ausgewählt ist, dass es von der gesamten Kennungsinformation (TI) für jede vorgegebene Hypothese (H-1, H-2, ..., H-N) der empfangenen Spracheingabe (SI) abhängt, so dass das Kennungssprachmodell (LM2) so ausgewählt wird, dass es nicht kausal ist.

**6.** Computerprogrammprodukt umfassend ein Computerprogramm-Mittel, das geeignet ist, das Verfahren der Spracherkennung nach einem der Ansprüche 1 bis 5 **dadurch** auszuführen und zu realisieren, dass alle seine Schritte ausgeführt werden, wenn es auf einem Computer oder einer digitalen Signalverarbeitungseinrichtung ausgeführt wird.

**7.** Computerlesbares Speichermedium umfassend ein Computerprogrammprodukt nach Anspruch 6.

**Revendications**

**1.** Procédé de reconnaissance vocale comprenant les étapes consistant à :

- recevoir une entrée vocale (SI) d'un utilisateur,
- déterminer un ensemble d'hypothèses ordonnées (OH) pour ladite entrée vocale (SI) reçue,

dans lequel ledit ensemble d'hypothèses ordonnées (OH) contient une information de repérage (TI) pour chacune desdites hypothèses, qui décrit au moins un type ou une variation de prononciation,

- utiliser un modèle de langage de repérage (LM2) fonctionnant sur ladite information de repérage (TI) uniquement,
- ré-ordonner ledit ensemble d'hypothèses en utilisant ledit modèle de langage de repérage (LM2), et
- sortir un ensemble d'hypothèses ré-ordonnées (ROH) et choisir la meilleure hypothèse (BH).

**2.** Procédé selon la revendication 1,

- dans lequel ladite information de repérage (TI) est générée en utilisant un modèle de langage primaire (LM1),
- dans lequel ledit modèle de langage primaire (LM1) contient des repères pour au moins certaines de ses entrées ou mots, et
- dans lequel lesdits repères sont choisis pour décrire au moins un type ou variation de prononciation d'une entrée ou d'un mot respectif.

**3.** Procédé selon l'une quelconque des revendications précédentes,

- dans lequel ladite information de repérage (TI) est générée en utilisant un dictionnaire,
- dans lequel ledit dictionnaire contient des repères pour au moins certains de ses mots ou entrées, et
- dans lequel lesdits repères sont choisis pour décrire au moins un type ou une variation de prononciation de l'entrée ou du mot respectif.

**4.** Procédé selon l'une quelconque des revendications précédentes,

- dans lequel ladite information de repérage (TI) est générée à l'aide d'une base de données de mots repères,
- dans lequel ladite base de données de mots repères contient des repères pour au moins certains de ses entrées de mots, et
- dans lequel lesdits repères sont choisis pour décrire au moins un type ou une variation de prononciation de l'entrée de mot respective.

**5.** Procédé selon l'une quelconque des revendications précédentes,

dans lequel ledit modèle de langage de repérage (LM2) est choisi de manière à dépendre de toutes lesdites informations de repérage (TI) de chaque hypothèse donnée (H-1, H-2, ..., H-N) de ladite entrée vocale (SI) reçue, de manière à ce que ledit modèle de langage de repérage (LM2) soit choisi de manière à ne pas être causal.

**6.** Produit de programme informatique,

comprenant un moyen de programmation informatique conçu pour effectuer et réaliser le procédé de reconnaissance vocale selon l'une quelconque des revendications 1 à 5, en effectuant toutes les étapes de celui-ci, lorsqu'il est exécuté sur un ordinateur ou un moyen de traitement des signaux numériques.

**7.** Support de stockage lisible par ordinateur,

comprenant un produit de programme informatique selon la revendication 6.

```
                    ┌─────────────┐
              SI    │   Speech    │
              ──────│    Input    │
                    └─────────────┘
                           │
                           ▼
                    ┌─────────────┐          ┌───────────┐
              SR    │   Speech    │          │           │
              ──────│  Recognizer │◄─────────│    LM1    │
                    └─────────────┘          └───────────┘
                           │
                       OH  │
                           ▼
                    ┌─────────────┐          ┌───────────┐
                    │  Re-order   │          │           │
              S4────│ Hypotheses  │◄─────────│    LM2    │
                    │  Using LM2  │          └───────────┘
                    └─────────────┘
                      ROH  │
                           ▼
                    ┌─────────────┐
              S5────│ Choose best │
                    │ Hypothesis  │
                    └─────────────┘
                       BH  │
                           ▼
              Output best hypothesis
```

# Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Mandarin accent adaptation based on context-independent/context-dependent pronunciation modeling. *International Conference on Acoustics, Speech and Signal Processing, Proceedings of ICASSP-2000*, 05 June 2000, vol. 2, 1025-1028